# EUROPÄISCHE PATENTSCHRIFT

(11) **EP 1 779 626 B1**
(45) Veröffentlichungstag und Bekanntmachung des Hinweises auf die Patenterteilung: **16.01.2008**
(21) Anmeldenummer: 04766516.1
(22) Anmeldetag: 17.08.2004
(51) Int. Cl.: H04L 29/06, H04Q 7/38, H04L 12/28

(54) **VERFAHREN UND SYSTEM FÜR MOBILE IP-NODES IN HETEROGENEN NETZWERKEN**
METHOD AND SYSTEM FOR MOBILE IP-NODES IN HETEROGENEOUS NETWORKS
PROCEDE ET SYSTEME DE NOEUDS IP MOBILES DANS DES RESEAUX HETEROGENES

(43) Veröffentlichungstag der Anmeldung: 02.05.2007
(73) Patentinhaber: Swisscom AG, 3050 Bern (CH)
(72) Erfinder: DANZEISEN, Marc, 3063 Ittigen (CH); SCHAEDLER, Michael, 3065 Bolligen (CH); RODELLAR, Daniel, CH-1003 Lausanne (CH)
(74) Vertreter: BOVARD AG
(86) Internationale Anmeldenummer: PCT/EP2004/051815
(87) Internationale Veröffentlichungsnummer: WO 2006/018042

(56) Entgegenhaltungen:
- EP-A- 1 271 896
- EP-A- 1 424 825
- US-A1- 2002 016 858

## Beschreibung

Die vorliegende Erfindung betrifft ein Verfahren zum Erstellen einer optimierten Kommunikationsverbindung und/oder eines Kommunikationsnetzwerkes zwischen zwei und/oder mehreren mobilen Netzwerknodes. Insbesondere betrifft das Verfahren mobile IP-Nodes in heterogenen Netzwerken.

Weltweit werden zur Zeit immer mehr Computer- und Kommunikationssysteme dazu gebraucht, grosse Datenmengen, insbesondere Multimediadaten über Netzwerke, wie z.B. einem LAN (Local Area Network), einem WAN (Wide Area Network) oder dem Internet via z.B. dem öffentlichen, geschalteten Telefonnetzwerk (PSTN: Public Switched Telephone Network), einem Mobilfunknetz (PLMN: Public Land Mobile Network) wie z.B. GSM- (Global System for Mobile Communication) oder UMTS-Netzen (Universal Mobile Telephone System) oder via z.B. einem WLAN (Wireless Local Area Network) etc. zu beziehen oder zu übermitteln. Dabei werden Daten dargestellt und/oder bearbeitet und/oder anderen Computersystemen modifiziert zur Verfügung gestellt. Solche Daten umfassen z.B. digitale Daten wie Texte, Graphiken, Bilder, Animationen, Video, Quicktime und Tonaufnahmen. Dazu gehören auch MPx (MP3) oder MPEGx (MPEG7) Standards, wie sie durch die Moving Picture Experts Group definiert werden. Gleichzeitig ist in den letzten Jahren ebenfalls weltweit die Zahl von mobilen Netzwerkbenutzern, insbesondere von Internetbenutzern und der dort angebotenen Information exponentiell gestiegen. Das wachsende Angebot an IP-fähigen mobilen Geräten, wie z.B. PDAs, Mobilfunktelefone und Laptops, geht mit dieser Entwicklung Hand in Hand. Der Übergang von fixen Netzwerknodes in Netzwerken zu flexibleren Anforderungen durch erhöhte Mobilität hat eben erst begonnen. In der Mobilfunktelephonie z.B. zeigt sich diese Tendenz u.a. auch an neuen Standards wie GPRS (General Packet Radio Services), EDGE (Enhanced Data GSM Environment), UMTS (Universal Mobile Telecommunications Service) oder HSDPA (High-Speed Downlink Packet Access). Um den Unterschied zwischen der momentanen Realität und den IP-Verbindungsmöglichkeiten der Zukunft zu verstehen, kann man sich als Vergleich die Entwicklung der Telefonie Richtung Mobilität in den letzten zwanzig Jahren vors Auge rufen.

Mobile Computerbenutzung unterscheidet sich in vielen Arten von Computerbenutzung und Netzwerkfähigkeit in Festnetzwerken. Bei mobiler Netzwerkbenutzung stehen heute meist mehrere verschiedene Netzwerkstandards für die Anbindung des mobilen Netzwerknodes an ein Netzwerk zur Verfügung. Die verschiedenen Netzwerkanschlüsse unterscheiden sich jedoch typischerweise stark in Abhängigkeit des Standortes, des Netzwerkanschlusses etc., was die Sicherheit, Datendurchsatzrate, Quality of Service (QoS) Parameter etc. betrifft. Insbesondere kann eine Verbindung zeitweilig ganz unterbrochen werden. Z.B. kann ein mobiler Benutzer zuerst mittels Festnetzanschluss im Firmennetzwerk gearbeitet haben, dann beim Transfer zum Flughafen im Taxi z.B. mittels GPRS oder UMTS über ein Mobilfunknetz und schliesslich bei einem WLAN Hotspot oder Accesspoint im Flughafenwarteraum weiterarbeiten. Dabei sollte ein bestehender Zugriff von Applikationen auf dem mobilen Netzwerknode nicht unterbrochen werden, wenn der Benutzer seinen Standort im Netzwerk ändert. Im Gegenteil sollten alle Verbindungs- und Schnittstellenänderungen z.B. bei einem Wechsel in unterschiedlichen Netzwerken (Ethernet, Mobilfunknetz, WLAN, Bluetooth etc.) automatisch und nicht interaktiv geschehen können, so dass der Benutzer davon nicht einmal Kenntnis zu haben braucht. Dies gilt auch bei einem Schnittstellenwechsel, z.B. während der Benutzung von Real-Time- Applikationen. Sinnvollerweise sollte ein Schnittstellenwechsel im mobilen Netzwerknode basierend auf Datenübertragungsbandbreite, Kosten, Sicherheit etc. zusätzlich optimiert werden können. Idealerweise sollte dies natürlich automatisiert geschehen können. Wirkliches mobiles Computing weist viele Vorteile basierend auf einem jederzeitigen stabilen Zugang, z.B. zum Internet, auf. Erst mit solchem Zugang lässt sich die Arbeit wirklich frei und unabhängig vom Schreibtisch aus gestalten. Die Anforderungen an mobile Netzwerknodes in Netzwerken unterscheidet sich aber von der erwähnten Entwicklung in der Mobilfunktechnik auf verschiedene Arten. Die Endpunkte im Mobilfunk sind gewöhnlich Menschen. Bei mobilen Nodes können aber Computerapplikationen Interaktionen zwischen anderen Netzteilnehmern ohne jegliches menschliches Zutun oder Eingreifen ausführen. Beispiele dazu finden sich in Flugzeugen, Schiffen und Automobilen zu Genüge. So kann insbesondere mobiles Computing mit Internet Zugriff zusammen mit anderen Applikationen wie z.B. in Kombination mit Positionsbestimmungsgeräten, wie dem satellitenbasierenden GPS (Global Positioning System) sinnvoll sein.

Bei mobilem Netzwerkzugriff via Internet Protokoll (IP) wird das IP-Protokoll dazu benutzt, die Datenpakete von der Quelladresse (Source Address) zur Zieladresse (Destination Address) im Netz mittels sog. IP-Adressen umzuleiten bzw. zu routen. Diese Adressen sind einem festen Standort im Netzwerk zugeordnet, ähnlich wie die Telefonnummern des Festnetzes einer physikalischen Dose zugeordnet sind. Wenn die Zieladresse der Datenpakete ein mobiler Node ist, bedeutet das, dass bei jedem Netzwerkstandortwechsel eine neue IP-Netzwerkadresse zugeordnet werden muss, was den transparenten, mobilen Zugriff verunmöglicht. Diese Probleme wurden durch den mobilen IP Standard (IEFT RFC 2002, Okt. 1996 und RFC 3220, Jan. 2002) der Internet Engineering Task Force (IETF) gelöst, indem das mobile IP dem mobilen Node erlaubt, zwei IP-Adressen zu benutzen. Die eine davon ist die normale, statische IP-Adresse (Home-Adresse), die den Ort des Heimnetzes angibt, während die zweite eine dynamische IP Care-Of-Adresse ist, die den aktuellen Standort des mobilen Nodes im Netz bezeichnet. Die Zuordnung der beiden Adressen erlaubt es, die IP-Datenpakete an die richtige, momentane Adresse des mobilen Nodes umzuleiten.

Das mobile IP des IEFT löst jedoch nicht alle Probleme der mobilen Netzwerkbenutzung. Wie erwähnt kann es sinnvoll sein, bei mehreren verfügbaren Übertragungskanälen die Übertragungskanäle im mobilen Node basierend auf Datenübertragungsbandbreite, Kosten, Sicherheit etc. zu optimieren, da nicht alle Daten notwendigerweise die gleichen QoS Parameter benötigen. So kann z.B. zum Austausch von Sicherheitsparametern und/oder Konfigurationsparametern, wie z.B. Identifikation und/oder Authentifikation mittels Passwörtern, Schlüssel zur Datenverschlüsselung etc. die Sicherheit der Verbindung viel bedeutsamer sein als z.B. die Übertragungsrate. Hingegen kann bei der Übertragung von grossen Datenmengen z.B. bei Multimediadaten etc. die Bandbreite eine grössere Rolle spielen, als die Datensicherheit. Dies gilt insbesondere bei der Einrichtung von virtuellen privaten Kommunikationsnetzen. Virtuelle private Kommunikationsnetze ermöglichen die direkte Kommunikation zwischen Kommunikationspartnern (peer-to-peer), ohne dass unberechtigte Drittparteien der Kommunikation beitreten oder Daten der Kommunikation missbräuchlich benutzen können. Im Unterschied zu realen privaten Kommunikationsnetzen werden virtuelle private Kommunikationsnetze über geteilte Kommunikationsmedien aufgebaut und typischerweise mittels kryptografischer Mechanismen gegenüber unberechtigter Drittparteien gesichert. Geteilte Kommunikationsmedien umfassen vorwiegend elektromagnetische Wellen, insbesondere im Funkbereich oder im Infrarotbereich. Zur Sicherung der Datenkommunikation über geteilte Kommunikationsmedien sind dem Fachmann verschiedene kryptografische Mechanismen bekannt, zum Beispiel IPSec (Internet Protocol Security) und SSL (Secure Socket Layer) zum Erstellen von gesicherten Röhren, so genannten Secure Pipes. Bei der Sicherstellung der Authentizität eines Kommunikationspartners ergeben sich allerdings grössere Probleme, weil selbst die Verwendung von Passwörtern und/oder Benutzeridentifizierungen keine Gewähr bietet, dass diese vom berechtigten Benutzer übermittelt werden.

In der Patentschrift US 6 445 920 werden Vorrichtungen für den Aufbau von virtuellen privaten Kommunikationsnetzen zwischen Kommunikationsendgeräten von Teilnehmern in Mobilfunknetzen beschrieben. Gemäss US 6 445 920 werden Teilnehmer des Mobilfunknetzes, die an einem gemeinsamen virtuellen privaten Kommunikationsnetz teilhaben möchten, in einer Benutzerdatenbank des Mobilfunknetzes, dem so genannten HLR (Home Location Register), mit einer diesbezüglichen speziellen zusätzlichen Kennung registriert. Beim Einbuchen eines Teilnehmers in das Mobilfunknetz wird gemäss US 6 445 920, wie im normierten GSM-Mobilfunknetz (Global System for Mobile Communication), eine Benutzeridentifizierung von einem Identifizierungsmodul im Kommunikationsendgerät des Teilnehmers an das Mobilfunknetz übermittelt und unter Verwendung eines kryptografischen Verfahrens zwischen dem Identifizierungsmodul und einer Zugangskontrolleinheit des Mobilfunknetzes authentifiziert. Teilnehmer, die im Mobilfunknetz mit der speziellen Kennung eines bestimmten virtuellen privaten Kommunikationsnetzes registriert sind, können sich gemäss US 6 445 920 im Mobilfunknetz gegenseitig unter Verwendung von registrierten Kurzwahlnummern anrufen und von reduzierten Kommunikationstarifen profitieren.

In der Patentschrift US 6 445 920 wird zwar das Problem der Authentifizierung der Teilnehmer durch die GSM-Authentifizierung der Benutzeridentifizierungen gelöst, US 6 445 920 liefert jedoch keinen Hinweis darauf, wie mehr als zwei Teilnehmer in einem virtuellen privaten Kommunikationsnetz gemeinsam kommunizieren können oder wie Teilnehmer in einem virtuellen privaten Kommunikationsnetz ausserhalb des Mobilfunknetzes miteinander kommunizieren können. Die Kommunikation zwischen mehreren Kommunikationsendgeräten in virtuellen privaten Kommunikationsnetzen ausserhalb von zellulären Mobilfunknetzen wird jedoch insbesondere mit der Verbreitung von Kommunikationsendgeräten, die mit Kommunikationsschnittstellen für geteilte Kommunikationsmedien ausgerüstet sind, immer wünschenswerter. Kommunikationsendgeräte werden immer häufiger mit Kommunikationsschnittstellen für lokale Kommunikationsnetze basierend auf verteilten Kommunikationsmedien ausgerüstet, beispielsweise WLAN-Module (Wireless Local Area Network), Funkgeräteschnittstellen wie Bluetooth, oder Infrarotgeräteschnittstellen wie IrDA (Infrared Data Association).

In der Patentanmeldung EP 1 424 825 wird ein Verfahren zum Aufbauen eines virtuellen privaten Kommunikationsnetzes beschrieben. Mittels einer Dienstzentrale eines Telekommunikationsnetzwerks werden Konfigurationsdaten zwischen Kommunikationsendgeräten ausgetauscht und über ein geteiltes Kommunikationsmedium der Kommunikationsendgeräte wird zwischen den Kommunikationsendgeräten ein virtuelles privates Kommunikationsnetz aufgebaut. Ein Nachteil dieses Verfahren ist es, dass Konfigurationsdaten nicht über ein Netzwerk mit definierbaren Voraussetzungen austauschbar ist und somit beispielsweise die Sicherheit des virtuellen privaten Kommunikationsnetzes höchstens so gut sein kann wie beispielsweise die Sicherheit der Dienstzentrale.

Es ist eine Aufgabe der vorliegenden Erfindung, ein neues Verfahren und neue Vorrichtungen zum Aufbauen eines Datenübertragungskanales, insbesondere eines virtuellen privaten Kommunikationsnetzes zwischen Kommunikationsendgeräten vorzuschlagen, welche nicht die Nachteile des Stands der Technik aufweisen. Das neue Verfahren und die neuen Vorrichtungen sollen insbesondere auch den Aufbau eines virtuellen privaten Kommunikationsnetzes zwischen mehreren Kommunikationsendgeräten über ein geteiltes Kommunikationsmedium ausserhalb von zellulären Mobilfunknetzen ermöglichen.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass zum Erstellen einer optimierten Kommunikationsverbindung und/oder eines Kommunikationsnetzwerkes zwischen zwei und/oder mehreren mobilen Netzwerknodes ein Schnittstellenverwaltungsmodul eines ersten mobilen Netzwerknodes den mobilen Netzwerknode nach verfügbaren Netzwerkschnittstellen überprüft und eine Lookup-Table mit den verfügbaren Netzwerkschnittstellen erstellt, dass basierend auf der Lookup-Table mittels eines Signalisierungsroutermoduls mindestens ein Signalisierungskanal zum Übermitteln von Konfigurationsdaten mit Kommunikationsparametern und/oder Sicherheitsparametern über eine der verfügbaren Netzwerkschnittstellen mit einem zweiten mobilen Netzwerknodes aufgebaut wird, dass basierend auf der Lookup-Table mit den Kommunikationsparametern und Sicherheitsparametern mittels eines Datenroutermoduls mindestens ein Datenkanal zwischen dem ersten mobilen Netzwerknode und dem zweiten mobilen Netzwerknode aufgebaut wird. Insbesondere können die mobilen Netzwerknodes Netzwerkschnittstellen zu unterschiedlichen Netzen umfassen, wie z.B. Ethernet, Bluetooth, Mobilfunknetze (GSM: Global System for Mobile Communication, UMTS: Universal Mobile Telephone System etc.) oder WLAN (Wireless Local Area Network. Ein Vorteil der Erfindung ist, dass der Signalisierungskanal zur Übertragung von Kommunikationsparametern und/oder Sicherheitsparametern vom Datenkanal zur Übertragung allgemeiner Daten getrennt konfiguriert werden kann. Insbesondere können dabei unterschiedliche Anforderungen an Sicherheit, Bandbreite, Kosten etc. für die verschiedenen Kanäle berücksichtigt bzw. optimiert werden.

In einer Ausführungsvariante überprüft ein Schnittstellenverwaltungsmodul des zweiten mobilen Netzwerknodes den zweiten mobilen Netzwerknode nach verfügbaren Netzwerkschnittstellen und erstellt eine zweite Lookup-Table mit verfügbaren Netzwerkschnittstellen des zweiten mobilen Netzwerknodes, wobei zum Aufbauen des mindestens einen Signalisierungs- und/oder Datenkanals Konfigurationsdaten mit Kommunikationsparametern und/oder mit Sicherheitsparametern basierend auf der ersten und/oder zweiten Lookup-Table zwischen dem ersten Netzwerknode und dem zweiten Netzwerknode übertragen werden. Diese Ausführungsvariante hat den Vorteil, dass eine beidseitig optimierte Datenübertragung möglich wird. Dabei können z.B. Optimierungen benutzerspezifisch und/oder benutzerkontrolliert und/oder automatisiert für die entsprechenden Parameter allgemein oder einzeln berücksichtigt werden. Dies war im Stand der Technik so in keiner Weise möglich.

In einer Ausführungsvariante werden für den Aufbau des mindestens einen Signalisierungskanals und/oder des mindestens einen Datenkanals unterschiedliche Netzwerkschnittstellen verwendet. Eine solche Ausführungsvariante hat insbesondere den Vorteil, dass ein Signalisierungs- oder Datenkanal über eine besonders geeignete Netzwerkschnittstelle, wie beispielsweise eine Netzwerkschnittstelle mit geeigneten Sicherheitsmerkmalen und/oder eine Netzwerkschnittstelle mit einer geeigneten Datenkapazität, aufgebaut werden kann.

In einer Ausführungsvariante werden mehrere Signalisierungskanäle und/oder mehrere Datenkanäle aufgebaut, wobei den einzelnen Signalisierungs- und/oder Datenkanälen unterschiedliche Netzwerkschnittstellen zuordenbar sind. Eine solche Ausführungsvariante hat insbesondere den Vorteil, dass Signalisierungs- und/oder Datenkanäle redundant über verschiedene Netzwerkschnittstellen aufbaubar sind und somit bei sich bewegenden mobilen Netzwerknodes eine stark erhöhte Datenübertragungssicherheit erreichbar ist.

In einer anderen Ausführungsvariante werden die Konfigurationsdaten unidirektional und/oder bidirektional zwischen dem ersten Netzwerknode und dem zweiten Netzwerknode übertragen. Die bidirektionale Übertragung hat für bestimmte Anwendungen den Vorteil, dass bei Unterbruch einer Datenverbindung die Verbindung schneller wieder aufgebaut werden kann. Z.B. können die Konfigurationsdaten auch beidseitig gespeichert werden, wobei auch bei einem längeren Unterbruch die Verbindung basierend auf den gespeicherten Konfigurationsdaten und nicht z.B. über den Fall-Back-Kanal wieder aufgebaut wird. Die unidirektionale Übertragung hat dagegen u.a. den Vorteil, dass stets nur einer der Netzwerknodes (z.B. Master) die Datenverbindung bestimmen muss.

In einer weiteren Ausführungsvariante überprüft das entsprechende Schnittstellenverwaltungsmodul den ersten und /oder den zweiten mobilen Netzwerknode nach verfügbaren Netzwerkschnittstellen periodisch und aktualisiert die jeweilige Lookuptable. Diese Ausführungsvariante hat den Vorteil, dass die Lookup-Table stets auf dem aktuellsten Stand gehalten wird und sofort verfügbar ist. Insbesondere kann durch das permanente Monitoring der Netzwerkschnittstellen und ihrer Eigenschaften z.B. automatisch gewechselt werden, falls Netzwerkschnittstellen mit besseren Übertragungsoptionen als die momentan Aktive verfügbar werden. Als Ausführungsvariante ist es auch möglich, dass sich die Kriterien für den automatischen Wechsel der Schnittstelle durch den Benutzer bestimmen lassen. Dies hat u.a. den Vorteil, dass der Benutzer sehr individuell entsprechend seinen Bedürfnissen die Schnittstelle konfigurieren kann.

In einer wieder anderen Ausführungsvariante wird mittels des Signalisierungsroutermoduls basierend auf der ersten und/oder zweiten Lookup-Table und/oder auf den Kommunikationsparametern der Signalisierungskanal dynamisch angepasst und/oder gewechselt. Der Wechsel kann als Ausführungsvariante auch anhand von durch den Benutzer festlegbaren Kriterien automatisch geschehen. Dies hat den Vorteil, dass der mobile Node automatisch, je nach definiertem Kriterium, stets die Schnittstelle mit z.B. dem momentan grössten verfügbaren Datendurchsatz und/oder mit dem besten Preis-Leistungsverhältnis und/oder Sicherheit etc. für den Signalisierungskanal benutzt. Insbesondere können die Schnittstellen auch dynamisch konfiguriert werden. Dies hat u.a. den Vorteil, dass z.B. eventuell vorhandene Services, wie z.B. ein DHCP (Dynamic Host Configuration Protocol) Service, genutzt werden können und die Handhabung für den Benutzer durch die Automatisierung der Konfiguration vereinfacht wird.

In einer Ausführungsvariante werden basierend auf der ersten und/oder zweiten Lookup-Table und/oder auf den Konfigurationsdaten weitere Signalisierungskanäle aufgebaut, wobei die einzelnen Signalisierungskanäle unterschiedlichen Kommunikationsparametern und/oder Sicherheitsparametern zugeordnet sind. Dies hat z.B. bezüglich Datendurchsatz und/oder Sicherheit etc. u.a. den Vorteil, dass parallele Signalisierungskanäle benutzt werden können. Insbesondere kann mit parallelen Signalisierungskanälen stets ein Fall-Back Kanal bereitgehalten werden.

In einer weiteren Ausführungsvariante werden Konfigurationsdaten periodisch und/oder bei Änderung der Lookup-Tables übermittelt und basierend auf den übermittelten Konfigurationsdaten die ein oder mehreren Signalisierungskanäle und/oder ein oder mehreren Datenkanäle dynamisch geroutet. Der Wechsel kann wiederum als Ausführungsvariante auch anhand von durch den Benutzer festlegbaren Kriterien automatisch geschehen. Dies hat den wie oben erwähnten Vorteil, dass der mobile Node automatisch je nach definiertem Kriterium stets die Schnittstelle mit z.B. dem momentan grössten verfügbaren Datendurchsatz und/oder mit dem besten Preis-Leistungsverhältnis und/oder Sicherheit etc. für den/die Signalisierungskanal/-kanäle benutzt.

In einer anderen Ausführungsvariante umfassen der erste und/oder der zweite mobile Netzwerknode einen Fallbacksignalisierungskanal, wobei der Fallbacksignalisierungskanal bei Unterbrechung von einem oder mehreren Signalisierungskanälen als temporärer Signalisierungskanal verwendet wird. Dies hat u.a. den Vorteil, dass bei kurzfristigem und/oder längerem Verbindungsunterbruch, die Verbindung über mindestens einen Kanal sofort wieder aufgebaut werden kann, wobei z.B. basierend auf den Konfigurationsdaten weitere Kanäle aufbaubar sind.

In einer anderen Ausführungsvariante umfassen die Konfigurationsdaten Parameter zur Bestimmung der Datensicherheit und/oder der Zuverlässigkeit und/oder der minimalen Durchsatzrate und/oder der Identifikation und/oder des Pagings und/oder der Authentifikation eines Signalisierungskanales. Diese Ausführungsvariante hat u.a. die gleichen Vorteile wie die vorhergehende Ausführungsvariante.

In einer weiteren Ausführungsvariante werden die verfügbaren Netzwerkschnittstellen mindestens teilweise dynamisch konfiguriert. Dies hat wie oben u.a. den Vorteil, dass eventuell vorhandene Services, wie z.B. ein DHCP (Dynamic Host Configuration Protocol) Service, genutzt werden können und die Handhabung für den Benutzer durch die Automatisierung der Konfiguration vereinfacht wird.

In einer wieder anderen Ausführungsvariante werden die verfügbaren Netzwerkschnittstellen mindestens teilweise statisch konfiguriert. Dies hat u.a. den Vorteil, dass die Konfiguration der Netzwerkschnittstellen für den Benutzer stets kontrollierbar und/oder überblickbar ist.

Bei allen oben genannten Ausführungsvarianten ist es in einer zusätzlichen Ausführungsvariante möglich, ausgehende Datenpakete in einem Datenbuffer des mobilen Nodes zu buffern, falls die Netzanbindung des mobilen Nodes unterbrochen wird, so dass die Outputdatenrate von einer oder mehreren Applikationen mittels des Datenbuffers aufrechterhalten oder innerhalb einer bestimmten Schwankungstoleranz gehalten wird. Der Vorteil dieser Ausführungsvariante ist u.a., dass bei einem Wechsel der physikalischen Schnittstelle damit die Outputdatenrate z.B. einer IP-Applikation konstant bzw. innerhalb einer vorgegebenen Schwankungstoleranz gehalten werden kann, solange die Speicherkapazität des Datenbuffers zum Speichern der ausgehenden Datenpakete ausreicht. Dies hat wiederum den Vorteil, dass die Datendurchsatzrate bei einem Unterbruch durch die Applikationen oder den Kernel nicht heruntergefahren wird.

An dieser Stelle soll festgehalten werden, dass sich die vorliegende Erfindung neben dem erfindungsgemässen Verfahren auch auf ein System zur Ausführung dieses Verfahrens bezieht.

Nachfolgend werden Ausführungsvarianten der vorliegenden Erfindung anhand von Beispielen beschrieben. Die Beispiele der Ausführungen werden durch folgende beigelegte Figuren illustriert:

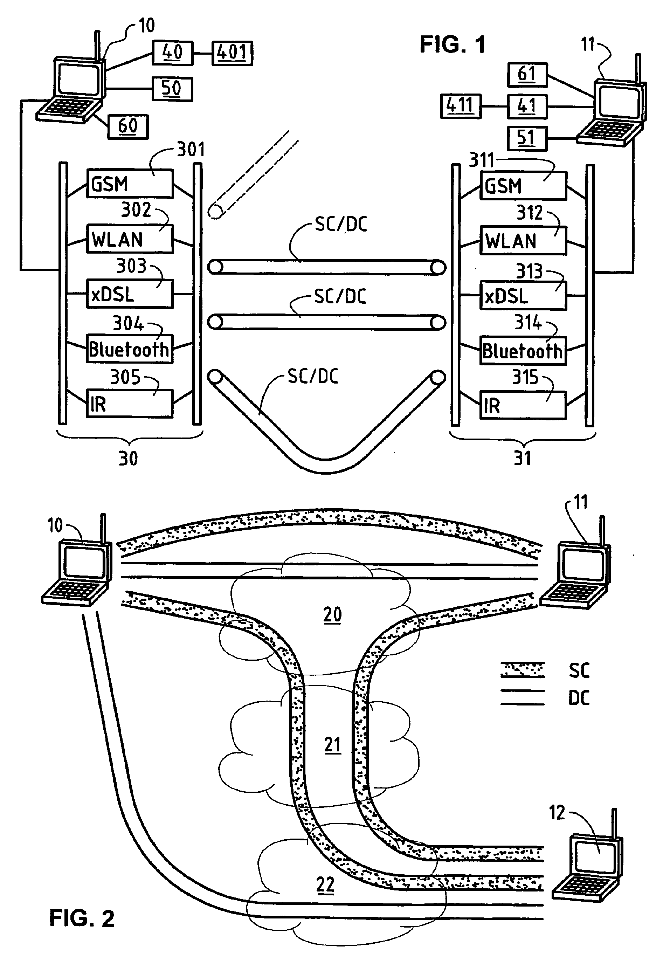

Figur 1 zeigt ein Blockdiagramm, welches schematisch ein Verfahren und ein System zum Erstellen einer optimierten Kommunikationsverbindung und/oder eines Kommunikationsnetzwerkes zwischen zwei und/oder mehreren mobilen Netzwerknodes 10,11,12,... illustriert. Dabei werden die mindestens einen Signalisierungskanäle und die mindestens einen Datenkanäle separat aufgebaut und optimiert.
Figur 2 zeigt ein Blockdiagramm, welches ein Verfahren und ein System zum Erstellen einer optimierten Kommunikationsverbindung und/oder eines Kommunikationsnetzwerkes zwischen zwei und/oder mehreren mobilen Netzwerknodes 10,11,12,... illustriert. Das Bezugszeichen SC gibt dabei die Signalisierungskanäle an, während das Bezugszeichen DC die Datenkanäle anzeigt.

Figur 1 und Figur 2 illustrieren eine Architektur, die zur Realisierung der Erfindung verwendet werden kann. In der Figur 2 bezieht sich das Bezugszeichen SC auf den Signalisierungskanal und DC auf den Datenkanal. Der/die mobilen Netzwerknode 10,11,12,... verfügen dabei über die notwendige Infrastruktur, einschliesslich Hardware- und Softwarekomponenten, um ein beschriebenes erfindungsgemässes Verfahren und/oder System zu realisieren, insbesondere um die Verbindungen zu den Netzwerken 20,21,22,... über die vorhandenen Schnittstellen aufzubauen. Unter mobilen Nodes 10 sind u.a. alle möglichen sog. Customer Premise Equipment (CPE) zu verstehen, die zur Benutzung an verschiedenen Netzwerkstandorten und/oder verschiedenen Netzwerken vorgesehen sind. Die mobilen CPEs oder Netzwerknodes 10 können ein oder mehrere verschiedene Netzwerkschnittstellen 30 besitzen, die auch mehrere unterschiedliche Netzwerkstandards 301,302,303,... bzw. 311,312,313,... unterstützen können. Die Netzwerkschnittstellen 30 des mobilen Nodes 10/11/12 können z.B. Schnittstellen zu Ethernet oder einem anderen Wired LAN (Local Area Network), Bluetooth 304/314, GSM (Global System for Mobile Communication) 301/311, GPRS (Generalized Packet Radio Service), USSD (Unstructured Supplementary Services Data), UMTS (Universal Mobile Telecommunications System) und/oder WLAN (Wireless Local Area Network) 302/312, xDSL (Digital Subscriber Line) 303/313, IR (InfraRed) 305/315 etc. umfassen. Die Referenznummern 20,21,22,... stehen dementsprechend für die verschiedenen heterogenen Netzwerke, wie z.B. einem Wired LAN, d.h. einem lokalen Festnetz, insbesondere auch dem PSTN (Public Switched Telephone Network) etc., einem Bluetooth-Netzwerk, z.B. für Installationen in überdachten Örtlichkeiten, ein Mobilfunknetz mit GSM und/oder UMTS etc. oder einem Wireless LAN. Die Schnittstellen 30/31 können nicht nur packet-switched Schnittstellen, wie sie von Netzwerkprotokollen wie z.B. Ethernet oder Tokenring direkt benutzt werden, sondern auch circuit-switched Schnittstellen, die mittels Protokollen, wie z.B. PPP (Point to Point Protocol), SLIP (Serial Line Internet Protocol) oder GPRS (Generalized Packet Radio Service) benutzt werden können, d.h. welche Schnittstellen z.B. keine Netzwerkadresse, wie eine MAC- oder eine DLC-Adresse besitzen. Die Referenznummer 20 kann z.B. das gewohnte, weltweite IP-Backbone-Netzwerk bezeichnen. Wie erwähnt, kann die Kommunikation z.B. auch über ein Mobilfunknetz 21 wie GSM/UMTS erfolgen, beispielsweise auch mittels speziellen Kurzmeldungen, z.B. SMS (Short Message Services), EMS (Enhanced Message Services), über einen Signalisierungskanal, wie z.B. USSD (Unstructured Supplementary Services Data) oder andere Techniken, wie MExE (Mobile Execution Environment), GPRS (Generalized Packet Radio Service), WAP (Wireless Application Protocol) oder UMTS (Universal Mobile Telecommunications System) oder über einen Nutzkanal.

Zum Erstellen einer optimierten Kommunikationsverbindung SC/DC und/oder eines Kommunikationsnetzwerkes SC/DC zwischen zwei und/oder mehreren mobilen Netzwerknodes 10,11,12,... überprüft ein Schnittstellenverwaltungsmodul 40 eines ersten mobilen Netzwerknodes 10 den mobilen Netzwerknode 10 nach verfügbaren Netzwerkschnittstellen 30 und erstellt eine Lookup-Table 401 mit den verfügbaren Netzwerkschnittstellen 30. Wie erwähnt werden die Netzwerkschnittstellen 30/31 durch ein Schnittstellenverwaltungsmodul 40/41 verwaltet. Die Netzwerkschnittstellen 30/31 können physikalische Schnittstellen sein oder z.B. durch das Schnittstellenverwaltungsmodul 30/31 softwaremässig generiert sein, d.h. virtuelle Schnittstellen sein. Das Schnittstellenverwaltungsmodul 40/41 bindet sich nach der Überprüfung des mobilen Nodes 10/11/21 nach verfügbaren Netzwerkschnittstellen an eine der verfügbaren Netzwerkschnittstellen 30/31 an. Die Überprüfung der Netzwerkschnittstellen 30/31 kann z.B. periodisch, d.h. nach Ablauf eines bestimmbaren Zeitfensters, geschehen, manuell konfigurierbar sein oder auf Request beispielsweise eines Kernels des mobilen Netzwerknodes 10/11/12. Die Lookup-Table 401/411 kann insbesondere Informationen, wie mögliche Datendurchsatzrate, Netzverfügbarkeit, Netzstabilität, Kosten der Netzbenutzung etc. umfassen. Die Anbindung an eine bestimmte Schnittstelle 30/31 kann anhand bestimmbarer Kriterien basierend auf in der Lookup-Table gespeicherten Informationen erfolgen. Insbesondere kann es sinnvoll sein, dass das Schnittstellenverwaltungsmodul 40/41 die Schnittstelle 30/31 automatisch basierend auf Informationen der Lookup-Table wechselt und aktualisiert. Die Anbindung an eine bestimmte Schnittstelle 30/31 kann aber auch z.B. durch den Benutzer bestimmbar sein und/oder manuell erfolgen. Die verfügbaren Netzwerkschnittstellen 30/31 können dynamisch konfiguriert werden, z.B. mittels einem DHCP-Service (DHCP: Dynamic Host Configuration Protocol), falls solche Mittel verfügbar sind, oder statisch, z.B. durch den Benutzer oder anhand vorgegebener Konfigurationsprofile. Über eine aktuelle Netzwerkschnittstelle können z.B. ein oder mehrere IP-Applikationen des mobilen Neztwerknodes 10/11/12 auf die heterogenen Netzwerke 21,21,22,... zugreifen.

Basierend auf der Lookup-Table 401 wird mittels eines Signalisierungsroutermoduls 50 ein Signalisierungskanal SC zum Übermitteln von Konfigurationsdaten mit Kommunikationsparametern und/oder Sicherheitsparametern über eine der verfügbaren Netzwerkschnittstellen 30 mit einem zweiten mobilen Netzwerknodes 11 aufgebaut. Ebenso wird basierend auf der Lookup-Table 401 mit den Kommunikationsparametern und Sicherheitsparametern mittels eines Datenroutermoduls 60 ein Datenkanal DC zwischen dem ersten mobilen Netzwerknode 10 und dem zweiten mobilen Netzwerknode 11 aufgebaut. Wie insbesondere aus Figuren 1 und 2 hervorgeht, können der Signalisierungskanal SC und der Datenkanal DC basierend auf unterschiedlichen Kriterien über unterschiedliche Netzwerkschnittstellen 30/31 und Netzwerkstandarts 301/302/303/304/305,... und 311/312/313/314/315,... aufgebaut werden. Natürlich ist klar, dass, falls die Kriterien sinnvoll sind, der Signalisierungskanal SC und der Datenkanal DC über die gleiche Netzanbindung erfolgen kann. Wechselt der mobile Netzwerknode 10/11/12 die Netzwerkschnittstelle 30/31 oder seinen topologischen Standort im Netz, kann die Anbindung an die Netzwerkschnittstelle 30/31 basierend auf den Informationen der Lookup-Table über das Schnittstellenverwaltungsmodul 40/41 aktualisiert werden. Für den Datenkanal DC kann z.B. ein Mobile IP-Modul bei einem Wechsel der Netzwerkschnittstelle 30/31 die Verwaltung der IP-Adressen übernehmen. Ebenso kann ein IPsec-Modul z.B. eine IPsec-Datentunnelkonfiguration gemäss der aktuellen Netzanbindung aktualisieren, worauf das Mobile IP-Modul die neue Care-of-Adresse beim Home-Agenten registriert, so dass das Routing der Datenpakete zum neuen Standort bzw. zur neuen Netzwerkanbindung des mobilen Netzwerknodes 10/11/12 stattfindet und aktualisiert die IP-Konfiguration falls notwendig beim Home-Agenten entsprechend der momentanen aktuellen Netzwerkschnittstelle oder Netzwerkschnittstellen. Die oben genannte Reihenfolge ist erfindungsgemäss, der Ablauf kann aber auch in umgekehrter Folge stattfinden.

Beim zweiten mobilen Netzwerknode 11 kann z.B. ebenfalls das Schnittstellenverwaltungsmodul 41 den zweiten mobilen Netzwerknode 11 nach verfügbaren Netzwerkschnittstellen 30 überprüfen und eine zweite Lookup-Table 411 mit verfügbaren Netzwerkschnittstellen 31 des zweiten mobilen Netzwerknodes 11 erstellen. Zum Aufbauen des Signalisierungs- und/oder Datenkanals (SC/DC) können z.B. Konfigurationsdaten mit Kommunikationsparametern und/oder mit Sicherheitsparametern basierend auf der ersten und/oder zweiten Lookup-Table 401/411 zwischen dem ersten Netzwerknode 10 und dem zweiten Netzwerknode 11 übertragen werden. Die Konfigurationsdaten können je nach Ausführungsvariante z.B. unidirektional oder bidirektional zwischen dem ersten Netzwerknode 10 und dem zweiten Netzwerknode 11 übertragen werden. Wie oben kann z.B. das entsprechende Schnittstellenverwaltungsmodul 40/41 den ersten und/oder den zweiten mobilen Netzwerknode 10/11 nach verfügbaren Netzwerkschnittstellen 30/31 periodisch überprüfen und die jeweilige Lookuptable 401/411 aktualisieren. Ebenso kann z.B. mittels des Signalisierungsroutermoduls 50/51 basierend auf der ersten und/oder zweiten Lookup-Table 401/411 und/oder auf den Kommunikationsparametern der Signalisierungskanal SC dynamisch angepasst und/oder gewechselt werden.

Es ist wichtig, darauf hinzuweisen, dass gemäss der Erfindung auch z.B. weitere Signalisierungskanäle (SC) basierend auf der ersten und/oder zweiten Lookup-Table 401/411 und/oder auf den Konfigurationsdaten aufgebaut werden können. Die einzelnen Signalisierungskanäle SC können dabei unterschiedliche Kommunikationsparametern und/oder Sicherheitsparametern zugeordnet sein. Die Konfigurationsdaten können periodisch und/oder bei Änderung der Lookup-Tables 401/411 übermittelt werden und basierend auf den übermittelten Konfigurationsdaten die ein oder mehreren Signalisierungskanäle SC und/oder ein oder mehreren Datenkanäle DC dynamisch geroutet werden. Beide mobilen Netzwerknodes 10/11 können einen Fallbacksignalisierungskanal umfassen, wobei der Fallbacksignalisierungskanal bei Unterbrechung von einem oder mehreren Signalisierungskanälen SC als temporärer Signalisierungskanal SC verwendet wird. Die Konfigurationsdaten können weiter z.B. Parameter zur Bestimmung der Datensicherheit und/oder der Zuverlässigkeit und/oder der minimalen Durchsatzrate und/oder der Identifikation und/oder des Paging und/oder der Authentifikation eines Signalisierungskanales SC umfassen. Die verfügbaren Netzwerkschnittstellen 30/31 können einseitig oder beidseitig mindestens teilweise dynamisch und/oder statisch konfiguriert werden.

Es bleibt zu erwähnen, dass in einem erweiterten Ausführungsbeispiel zum oben genannten Ausführungsbeispiel ausgehende Datenpakete in einem Datenbuffer des mobilen Netzwerknodes 10/11/12 gepuffert werden, falls die Netzanbindung des mobilen Netzwerknodes 10/11/12 unterbrochen wird, so dass die Outputdatenrate von z.B. zur Zeit angebundenen IP-Applikationen mittels des Datenbuffers aufrechterhalten oder innerhalb einer bestimmten Schwankungstoleranz gehalten wird, d.h. solange die Speicherkapazität des Datenbuffers zum Speichern der Datenpakete ausreicht. Falls der Netzwerkanbindungsunterbruch so innerhalb des z.B. im TCP vorgesehenen Zeitfensters für ein Verbindungstimeout liegt, kann die Outputdatenrate z.B. für IP-Applikationen so gehalten werden, dass keine automatische Verzögerung der Outputrate durch die IP-Applikationen stattfindet. Die Speicherung der Datenpakete kann z.B. kontinuierlich gleich oder gemäss der Zeitdauer des Unterbruchs stetig langsamer stattfinden. Es ist darauf hinzuweisen, dass gerade bei Realtime-Applikationen der Datenbuffer eine wichtige Rolle spielen kann, um bei einem Wechsel des topologischen Netzwerkstandortes Unterbrüche und Datenverlust zu minimieren. Der Datenbuffer kann in einem Ausführungsbeispiel hardware- oder softwaremässig einer Netzwerkschnittstelle 30/31 zugeordnet oder integriert realisiert sein, er kann aber auch separat im mobilen Netzwerknode 10/11 realisiert sein.

Es ist als Ausführungsvariante möglich, dass der mobile Netzwerknode 10/11 über zwei oder mehrere Netzwerkschnittstellen 30/31 gleichzeitig das gleiche Datenpaket erhalten kann. Dies gilt sowohl für den Signalisierungskanal SC als auch für den Datenkanal DC. Redundante Datenpakete werden in höheren Layern dann automatisch erkannt und entsprechend reduziert. Durch das gleichzeitige Verschicken von Datenpaketen und das parallele Erhalten der gleichen Datenpakete durch zwei unterschiedliche Netzwerkschnittstellen 30/31 kann z.B. der nahtlose Übergang von einer Schnittstelle 30/31 zu einer anderen durch den mobilen Node 10 gewährleistet werden. Bei Verwendung von Mobile IP können beispielsweise beim Signalisierungskanal SC und/oder beim Datenkanal DC für einen mobilen Node 10 mindestens zwei Care-of-Adressen entsprechend den momentan angebundenen aktuellen Netzwerkschnittstellen 30/31 zugeordnet sein. Sind mehr als zwei Netzwerkschnittstellen 30/31 gleichzeitig angebunden, erhöht sich die Anzahl zugeordneter Care-of-Adressen entsprechend. Der Home-Agent rootet die IP-Datenpakete, welche die Home-Adresse des mobilen Nodes 10 im IP-Header besitzen, entsprechend der genannten Mehrfach-Registrierung parallel an die verschiedenen registrierten Care-of-Adressen, d.h. an verschiedene Netzwerkschnittstellen des mobilen Netzwerknodes 10/11/12.

## Patentansprüche

1. Verfahren zum Erstellen einer optimierten Kommunikationsverbindung (SC/DC) oder eines Kommunikationsnetzwerkes (SC/DC) zwischen zwei oder mehreren mobilen Netzwerknodes (10,11,12), wobei ein Schnittstellenverwaltungsmodul (40) eines ersten mobilen Netzwerknodes (10) den mobilen Netzwerknode (10) nach verfügbaren Netzwerkschnittstellen (30) überprüft und eine Lookup-Table (401) mit den verfügbaren Netzwerkschnittstellen (30) erstellt, **dadurch gekennzeichnet,**
**dass** basierend auf der Lookup-Table (401) mittels eines Signalisierungsroutermoduls (50) mindestens ein Signalisierungskanal (SC) zum Übermitteln von Konfigurationsdaten mit Kommunikationsparametern und/oder Sicherheitsparametern über eine der verfügbaren Netzwerkschnittstellen (30) mit einem zweiten mobilen Netzwerknodes (11) aufgebaut wird,
**dass** basierend auf der Lookup-Table (401) sowie basierend auf Kommunikationsparametern und/oder Sicherheitsparametern mittels eines Datenroutermoduls (60) mindestens ein Datenkanal (DC) zwischen dem ersten mobilen Netzwerknode (10) und dem zweiten mobilen Netzwerknode (11) aufgebaut wird.

2. Verfahren nach Anspruch 1, **dadurch gekennzeichnet, dass** ein Schnittstellenverwaltungsmodul (41) des zweiten mobilen Netzwerknodes (11) den zweiten mobilen Netzwerknode (11) nach verfügbaren Netzwerkschnittstellen (30) überprüft und eine zweite Lookup-Table (411) mit verfügbaren Netzwerkschnittstellen (31) des zweiten mobilen Netzwerknodes (11) erstellt, wobei zum Aufbauen des mindestens einen Signalisierungs- und/oder Datenkanals (SC/DC) Konfigurationsdaten mit Kommunikationsparametern und/oder mit Sicherheitsparametern basierend auf der ersten und/oder zweiten Lookup-Table (401/411) zwischen dem ersten Netzwerknode (10) und dem zweiten Netzwerknode (11) übertragen werden.

3. Verfahren nach einem der Ansprüche 1 bis 2, **dadurch gekennzeichnet, dass** für den Aufbau des mindestens einen Signalisierungskanals (SC) und/oder für den Aufbau des mindestens einen Datenkanals (DC) unterschiedliche Netzwerkschnittstellen (30) verwendet werden.

4. Verfahren nach einem der Ansprüche 1 bis 3, **dadurch gekennzeichnet, dass** mehrere Signalisierungskanäle (SC) und/oder mehrere Datenkanäle (DC) aufgebaut werden, wobei den einzelnen Signalisierungskanälen (SC) und/oder den einzelnen Datenkanälen (DC) unterschiedliche Netzwerkschnittstellen (30) zuordenbar sind.

5. Verfahren nach einem der Ansprüche 1 bis 4, **dadurch gekennzeichnet, dass** die Konfigurationsdaten unidirektional zwischen dem ersten Netzwerknode (10) und dem zweiten Netzwerknode (11) übertragen werden.

6. Verfahren nach einem der Ansprüche 1 bis 4, **dadurch gekennzeichnet, dass** die Konfigurationsdaten bidirektional zwischen dem ersten Netzwerknode (10) und dem zweiten Netzwerknode (11) übertragen werden.

7. Verfahren nach einem der Ansprüche 1 bis 6, **dadurch gekennzeichnet, dass** das entsprechende Schnittstellenverwaltungsmodul (40/41) den ersten und/oder den zweiten mobilen Netzwerknode (10/11) nach verfügbaren Netzwerkschnittstellen (30/31) periodisch überprüft und die jeweilige Lookup-Table (401/411) aktualisiert.

8. Verfahren nach einem der Ansprüche 1 bis 7, **dadurch gekennzeichnet, dass** mittels des Signalisierungsroutermoduls (50/51) basierend auf der ersten und/oder zweiten Lookup-Table (401/411) und/oder auf den Kommunikationsparametern der mindestens eine Signalisierungskanals (SC) dynamisch angepasst oder gewechselt wird.

9. Verfahren nach einem der Ansprüche 1 bis 8, **dadurch gekennzeichnet, dass** basierend auf der ersten und/oder zweiten Lookup-Table (401/411) und/oder auf den Konfigurationsdaten mehrere Signalisierungskanäle (SC) aufgebaut werden, wobei den einzelnen Signalisierungskanälen (SC) unterschiedliche Kommunikationsparameter und/oder Sicherheitsparameter zuordenbar sind.

10. Verfahren nach einem der Ansprüche 2 bis 9, **dadurch gekennzeichnet, dass** Konfigurationsdaten periodisch oder bei Änderung der Lookup-Tables (401/411) übermittelt werden und basierend auf den übermittelten Konfigurationsdaten der mindestens eine Signalisierungskanal (SC) und/oder der mindestens eine Datenkanal (DC) dynamisch geroutet werden.

11. Verfahren nach einem der Ansprüche 1 bis 10, **dadurch gekennzeichnet, dass** der erste und/oder der zweite mobile Netzwerknode (10/11) einen Fallbacksignalisierungskanal umfassen, wobei der Fallbacksignalisierungskanal bei Unterbrechung des mindestens einen Signalisierungskanals (SC) als temporärer Signalisierungskanal (SC) verwendet wird.

12. Verfahren nach einem der Ansprüche 2 bis 11, **dadurch gekennzeichnet, dass** die Konfigurationsdaten Parameter zur Bestimmung der Datensicherheit und/oder der Zuverlässigkeit und/oder der minimalen Durchsatzrate und/oder der Identifikation und/oder des Paging und/oder der Authentifikation des mindestens einen Signalisierungskanals (SC) umfassen.

13. Verfahren nach einem der Ansprüche 1 bis 12, **dadurch gekennzeichnet, dass** die verfügbaren Netzwerkschnittstellen (30/31) mindestens teilweise dynamisch konfiguriert werden.

14. Verfahren nach einem der Ansprüche 1 bis 12, **dadurch gekennzeichnet, dass** die verfügbaren Netzwerkschnittstellen (30/31) mindestens teilweise statisch konfiguriert werden.

15. Verfahren nach einem der Ansprüche 1 bis 14, **dadurch gekennzeichnet, dass** ausgehende Datenpakete in einem Datenbuffer des mobilen Netzwerknodes (10/11/12) gepuffert werden, falls die Netzanbindung des mobilen Nodes (10/11/12) unterbrochen wird, so dass die Outputdatenrate von zur Zeit angebundenen Applikationen mittels des Datenbuffers aufrechterhalten oder innerhalb einer bestimmten Schwankungstoleranz gehalten wird.

16. System zur automatischen Optimierung von Kommunikationsverbindungen oder Kommunikationsnetzwerken zwischen zwei oder mehreren mobilen Netzwerknodes (10/11/12), wobei ein erster mobiler Netzwerknode (10) ein Schnittstellenverwaltungsmodul (40) mit Mittel zum Überprüfen des mobilen Netzwerknodes (10) nach verfügbaren Netzwerkschnittstellen (30) und ein Speichermodul mit einer Lookup-Table (401) zum Speichern von Daten betreffend der verfügbaren Netzwerkschnittstellen (30) umfasst, **dadurch gekennzeichnet,**
**dass** der erste mobile Netzwerknode (10) ein Signalisierungsroutermodul (50) umfasst, wobei basierend auf der Lookup-Table (401) mittels des Signalisierungsroutermoduls (50) mindestens ein Signalisierungskanal (SC) zum Übermitteln von Konfigurationsdaten mit Kommunikationsparametern und/oder Sicherheitsparametern über eine der verfügbaren Netzwerkschnittstellen (30) mit einem zweiten mobilen Netzwerknodes (11) aufbaubar ist,
**dass** der erste mobile Netzwerknode (10) ein Datenroutermodul (60) umfasst, wobei basierend auf der Lookup-Table (401) mittels des Datenroutermoduls (60) mindestens ein Datenkanal (DC) zwischen dem ersten mobilen Netzwerknode (10) und dem zweiten mobilen Netzwerknode (11) aufbaubar ist.

17. System nach Anspruch 16, **dadurch gekennzeichnet, dass** der zweite mobile Netzwerknode (11) ein Schnittstellenverwaltungsmodul (41) zum Überprüfen des zweiten mobilen Netzwerknodes (11) nach verfügbaren Netzwerkschnittstellen (31) umfasst und ein Speichermodul zum Speichern einer zweite Lookup-Table (411) mit verfügbaren Netzwerkschnittstellen (31) umfasst, wobei zum Aufbauen des mindestens einen Signalisierungs- (SC) und/oder Datenkanals (DC) Konfigurationsdaten mit Kommunikationsparametern und/oder mit Sicherheitsparametern basierend auf der ersten und/oder zweiten Lookup-Table (411) zwischen dem ersten Netzwerknode (10) und dem zweiten Netzwerknode (11) übertragbar sind.

18. System nach einem der Ansprüche 16 oder 17, **dadurch gekennzeichnet, dass** für den Aufbau des mindestens einen Signalisierungskanals (SC) und/oder für den Aufbau des mindestens einen Datenkanals (DC) unterschiedliche Netzwerkschnittstellen (30) verwendbar werden.

19. System nach einem der Ansprüche 16 bis 18, **dadurch gekennzeichnet, dass** mehrere Signalisierungskanäle (SC) und/oder mehrere Datenkanäle (DC) aufbaubar sind, wobei den einzelnen Signalisierungskanälen (SC) und/oder den einzelnen Datenkanälen (DC) unterschiedliche Netzwerkschnittstellen (30) zuordenbar sind.

20. System nach einem der Ansprüche 16 bis 19, **dadurch gekennzeichnet, dass** mittels des entsprechenden Schnittstellenverwaltungsmoduls (40/41) der erste und/oder der zweite mobile Netzwerknode (10/11) periodisch nach verfügbaren Netzwerkschnittstellen (30/31) überprüfbar ist und die jeweilige Lookup-Table (401/411) aktualisierbar ist.

21. System nach einem der Ansprüche 16 bis 20, **dadurch gekennzeichnet, dass** mittels des Signalisierungsroutermoduls (50/51) basierend auf der ersten und/oder zweiten Lookup-Table (401/411) und/oder auf den Kommunikationsparametern der mindestens eine Signalisierungskanal (SC) dynamisch anpassbar oder wechselbar ist.

22. System nach einem der Ansprüche 16 bis 21, **dadurch gekennzeichnet, dass** basierend auf der ersten und/oder zweiten Lookup-Table (401/411) und/oder auf den Konfigurationsdaten mehrere Signalisierungskanäle (SC) aufbaubar sind, wobei den einzelnen Signalisierungskanäle (SC) unterschiedliche Kommunikationsparameter und/oder Sicherheitsparameter zugeordnet sind.

## Claims

1. Method for establishing an optimised communication link (SC/DC) or a communication network (SC/DC) between two and/or more mobile network nodes (10,11,12), an interface administration module (40) of a first mobile network node (10) checking the mobile network node (10) for available network interfaces (30) and setting up a look-up table (401) with the available network interfaces (30), **characterised**
**in that**, based on the look-up table (401), by means of a signalling router module (50), at least one signalling channel (SC), with a second mobile network node (11), is established for transmitting configuration data with communication parameters and/or security parameters via one of the available network interfaces (30),
**in that**, based on the look-up table (401) as well as the communication parameters and security parameters, at least one data channel (DC) is set up between the first mobile network node (10) and the second mobile network node (11), by means of a data router module (60).

2. Method according to claim 1, **characterised in that** an interface administration module (41) of the second mobile network node (11) checks the second mobile network node (11) for available network interfaces (30), and sets up a second look-up table (411) with available network interfaces (31) of the second mobile network node (11), configuration data with communication parameters and/or with security parameters based on the first and/or second look-up table (401/411) being transmitted between the first network node (10) and the second network node (11), for establishing the at least one signalling and/or data channel (SC/DC).

3. Method according to one of the claims 1 to 2, **characterised in that** different network interfaces (30) are used for establishing the at least one signalling channel (SC) and/or for establishing the at least one data channel (DC).

4. Method according to one of the claims 1 to 3, **characterised in that** a multiplicity of signalling channels (SC) and/or a multiplicity of data channels (DC) are established, different network interfaces (30) being assignable to the individual signalling channels (SC) and/or to the individual data channels (DC).

5. Method according to one of the claims 1 to 4, **characterised in that** the configuration data are transmitted unidirectionally between the first network node (10) and the second network node (11).

6. Method according to one of the claims 1 to 4, **characterised in that** the configuration data are transmitted bidirectionally between the first network node (10) and the second network node (11).

7. Method according to one of the claims 1 to 6, **characterised in that** the corresponding interface administration module (40/41) periodically checks the first and/or the second mobile network node (10/11) for available network interfaces (30/31) and updates the respective look-up table (401/411).

8. Method according to one of the claims 1 to 7, **characterised in that**, based on the first and/or second look-up table (401/411) and/or on communication parameters, the at least one signalling channel (SC) is dynamically adjusted or changed by means of the signalling router module (50/51).

9. Method according to one of the claims 1 to 8, **characterised in that**, based on the first and/or second look-up table (401/411) and/or on the configuration data, a multiplicity of signalling channels (SC) are established, different communication parameters and/or security parameters being assignable to the individual signalling channels (SC).

10. Method according to one of the claims 2 to 9, **characterised in that** configuration data are transmitted periodically and/or with change of the look-up tables (401/411), and based on the transmitted configuration data the at least one signalling channel (SC) and/or the at least one data channel (DC) are dynamically routed.

11. Method according to one of the claims 1 to 10, **characterised in that** the first and/or the second mobile network node (10/11) comprise a fallback signalling channel, the fallback signalling channel being used as temporary signalling channel (SC) upon interruption of the at least one signalling channel (SC).

12. Method according to one of the claims 2 to 11, **characterised in that** the configuration data comprise parameters for determining the data security and/or the reliability and/or the minimal throughput rate and/or the identification and/or the paging and/or the authentication of the at least one signalling channel (SC).

13. Method according to one of the claims 1 to 12, **characterised in that** the available network interfaces (30/31) are configured at least partially dynamically.

14. Method according to one of the claims 1 to 12, **characterised in that** the available network interfaces (30/31) are configured at least partially statically.

15. Method according to one of the claims 1 to 14, **characterised in that** outgoing data packets are buffered in a data buffer of the mobile network node (10/11/12), if the network connection of the mobile node (10/11/12) is interrupted, so that the output data rate of applications linked at the time is maintained by means of the data buffer or is kept within a particular fluctuation tolerance.

16. System for automatic optimisation of communication links or communication networks between two and/or more mobile network nodes (10/11/12), a first mobile network node (10) comprising an interface administration module (40), the interface administration module (40) including means for checking the mobile network node (10) for available network interfaces (30) and a storage module with a look-up table (401) for storing data relating to the available network interfaces (30), **characterised**
**in that** the first mobile network node (10) comprises a signalling router module (50), at least one signalling channel (SC) for transmission of configuration data with communication parameters and/or security parameters being able to be established, based on the look-up table (401), by means of the signalling router module (50), via one of the available network interfaces (30), with a second mobile network node (11),
**in that** the first mobile network node (10) comprises a data router module (60), at least one data channel (DC) being able to be established between the first mobile network node (10) and the second mobile network node (11) based on the look-up table (401), by means of the data router module (60).

17. System according to claim 16, **characterised in that** the second mobile network node (11) comprises an interface administration module (41) for checking the second mobile network node (11) for available network interfaces (31) and a storage module for storing a second look-up table (411) with available network interfaces (31), configuration data with communication parameters and/or with security parameters based on the first and/or second look-up table (411) being transmittable between the first network node (10) and the second network node (11) for establishing at least one signalling (SC) and/or data channel (DC).

18. System according to one of the claims 16 or 17, **characterised in that** different network interfaces (30) become usable for establishing the at least one signalling channel (SC) and/or for establishing the at least one data channel (DC).

19. System according to one of the claims 16 to 18, **characterised in that** a multiplicity of signalling channels (SC) and/or a multiplicity of data channels (DC) are able to be established, different network interfaces (30) being able to be assigned to the individual signalling channels (SC) and/or to the individual data channels (DC).

20. System according to one of the claims 16 to 19, **characterised in that**, by means of the corresponding interface administration module (40/41), the first and/or the second mobile network node (10/11) is checkable periodically for available network interfaces (30/31), and the respective look-up table (401/411) is able to be updated.

21. System according to one of the claims 16 to 20, **characterised in that** the at least one signalling channel (SC) is able to be dynamically adjusted and/or changed by means of the signalling router module (50/51) based on the first and/or second look-up table (401/411) and/or on the communication parameters.

22. System according to one of the claims 16 to 21, **characterised in that** a multiplicity of signalling channels (SC) are able to be established, based on the first and/or second look-up table (401/411) and/or on the configuration data, different communication parameters and/or security parameters being assigned to the individual signalling channels (SC).

## Revendications

1. Procédé pour l'établissement d'une connexion de communication optimisée (SC/DC) ou d'un réseau de communication (SC/DC) entre deux ou plusieurs noeuds de réseau mobiles (10, 11, 12), un module de gestion d'interface (40) d'un premier noeud mobile de réseau (10) vérifiant si le noeud de réseau mobile (10) dispose d'interfaces de réseau disponibles (30) et établissant une table Look-up (de référence) (401) avec les interfaces de réseau disponibles (30), **caractérisé en ce qu'**
en se basant sur la table Look-up (401) au moyen d'un module de routeur de signalisation (50), au moins un canal de signalisation (SC) pour la transmission de données de configuration avec des paramètres de communication et/ou des paramètres de sécurité est établi par l'une des interfaces de réseau disponibles avec le second noeud de réseau mobile (11),
en se basant sur la table Look-up (401) ainsi qu'en se basant sur des paramètres de communication et/ou des paramètres de sécurité au moyen d'un module de routeur de données (60) au moins un canal de données (DC) est établi entre le premier noeud mobile de réseau (10) et le second noeud mobile de réseau (11).

2. procédé selon la revendication 1, **caractérisé en ce qu'**un module de gestion d'interface (41) du second noeud mobile de réseau (11) vérifie si le second noeud de réseau mobile (11) dispose d'interfaces de réseau disponibles (30) et une seconde table Look-up (411) est créée avec les interfaces réseau disponibles (31) du second noeud de réseau mobile (11), pour l'établissement d'au moins un canal de données et/ou de signalisation (SC/DC), des données de configurations avec des paramètres de communication et/ou des paramètres de sécurité sont transmises en se basant sur la première et/ou la seconde table lookup (401/411) entre le premier noeud de réseau (10) et le second noeud de réseau (11).

3. Procédé selon l'une des revendications 1 à 2, **caractérisé en ce que** pour l'établissement d'au moins un canal de signalisation (SC) et/ou pour la réalisation d'au moins un canal de données (DC), différentes interfaces de réseau (30) sont utilisées.

4. Procédé selon l'une des revendications 1 à 3, **caractérisé en ce que** plusieurs canaux de signalisation (SC) et/ou plusieurs canaux de données (DC) sont établis, différentes interfaces de réseau (30) étant attribuables aux différents canaux de signalisation (SC) et/ou aux différents canaux de données (DC).

5. procédé selon l'un des revendications 1 à 4, **caractérisé en ce que** les données de configuration sont transmises unidirectionnellment entre le premier noeud de réseau (10) et le second noeud de réseau (11).

6. Procédé selon l'une des revendications 1 à 4, **caractérisé en ce que** les données de configuration sont transmises bidirectionnellement entre le premier noeud de réseau (10) et le second noeud de réseau (11).

7. procédé selon l'un des revendications 1 à 6, **caractérisé en ce que** le module de gestion d'interfaces correspondant (40/419 vérifie si périodiquement le premier et/ou le second noeud de réseau mobile (10/11) présente des interfaces de réseau disponibles (30/31) et actualise la table Look-up respective (401/411).

8. procédé selon l'un des revendications 1 à 7, **caractérisé en ce qu'**au moyen du module de routeur de signalisation (50/51) en se basant sur la première et/ou la seconde table look-up (401/411) et/ou sur les paramètres de communication, au moins canal de signalisation (SC) est adapté ou changé dynamiquement.

9. procédé selon l'un des revendications 1 à 8, **caractérisé en ce qu'**en se basant sur la première et/ou la seconde table lookup (401/411) et/ou sur les paramètres de communication, plusieurs canaux de signalisation (SC) sont établis, différents paramètres de communication et/ou paramètres de sécurité étant associables à chacun des canaux de signalisation (DC).

10. Procédé selon l'une des revendications 2 à 9, **caractérisé en ce que** des données de configuration sont transmises périodiquement ou en cas de modification des tables Look-up (401/411) et en se basant sur les données de configuration transmises au moins un canal de signalisation (SC) et/ou au moins un canal de données (DC) sont routés dynamiquement.

11. procédé selon l'un des revendications 1 à 10, **caractérisé en ce que** le premier et/ou le second noeud de réseau mobile (10/11) comprennent un canal de signalisation de secours, le canal de signalisation de secours étant utilisé en cas d'interruption d'au moins un canal de signalisation (Sc) en tant que canal de signalisation temporaire (SC).

12. procédé selon l'un des revendications 2 à 11, **caractérisé en ce que** les données de configuration comprennent des paramètres pour la détermination de la sécurité de données et/ou de la fiabilité et/ou du débit minimal et/ou de l'identification et/ou de la radiomessagerie et/ou de l'authentification d'au moins un canal de signalisation (SC).

13. procédé selon l'un des revendications 1 à 12, **caractérisé en ce que** les interfaces de réseau disponibles (30/31) sont configurées au moins partiellement dynamiquement.

14. procédé selon l'un des revendications 1 à 12, **caractérisé en ce que** les interfaces de réseau disponibles (30/31) sont configurées au moins partiellement statiquement.

15. procédé selon l'un des revendications 1 à 14, **caractérisé en ce que** des paquets de données sortants sont tamponnées dans une mémoire tampon de données du noeud de réseau mobile (10/11/12) si la liaison réseau du noeud mobile (10/11/12) est interrompue de sorte que le débit de sortie des données est maintenu par les applications reliées momentanément au moyen du tampon de données ou est maintenu à l'intérieur d'une tolérance de variation définie.

16. Système pour l'optimisation automatique de connexions de communications ou de réseaux de communication entre deux ou plusieurs noeuds de réseau mobiles (10/11/12), un premier noeud de réseau mobile (10) comprenant un module de gestion d'interfaces (40) avec des moyens pour la vérification de la disponibilité des interfaces de réseau (30) du noeud de réseau mobile (10) et un module de stockage avec une table Lookup (de référence) (401) pour le stockage de données concernant les interfaces de réseau disponibles (30), **caractérisé en ce que**
le premier noeud de réseau mobile (10) comprend un module de routeur de signalisation (50), en se basant sur la table Lookup (401) au moyen du module de routeur de signalisation (50), au moins un canal de signalisation (SC) pouvant être établi pour la transmission de données de configuration avec des paramètres de communication et/ou des paramètres de sécurité par l'une des interfaces de réseau disponibles (30) avec un second noeud de réseau mobile (11),
**en ce que** le premier noeud de réseau mobile (10) comprend un module de routeur de données (60), en se basant sur la table Lookup (401), un canal de données (DC) étant établi entre le premier noeud de réseau mobile (10) et le second noeud de réseau mobile (11) au moyen du module de routeur de données (60).

17. Système selon la revendication 16, **caractérisé en ce que** le second noeud de réseau mobile (11) comprend un module de gestion d'interfaces (41) pour la vérification de la disponibilité d'interfaces de réseau (31) du second noeud de réseau mobile (11) et un module de stockage pour le stockage d'une seconde table Lookup (411) avec les interfaces de réseau disponibles (31) pour l'établissement d'au moins un canal de signalisation (SC) et/ou de données (DC), des données de configuration étant transmettables avec des paramètres de communication et/ou des paramètres de sécurité en se basant sur la première et/ou la seconde table Lookup (411) entre le premier noeud de réseau (10) et le second noeud de réseau (11).

18. Système selon l'une des revendications 16 ou 17, **caractérisé en ce que** pour l'établissement d'au moins un canal de signalisation (SC) et/ou pour la réalisation d'au moins un canal de données (DC), différentes interfaces de réseau (30) sont utilisables.

19. Système selon l'une des revendications 16 à 18, **caractérisé en ce que** plusieurs canaux de signalisation (SC) et/ou plusieurs canaux de données (DC) peuvent être établis, différents interfaces de réseau (30) étant associables à chacun des canaux de signalisation (SC) et/ou de canaux de données (DC).

20. Système selon l'une des revendications 16 à 19, **caractérisé en ce qu'**au moyen du module de gestion d'interface correspondant (40/41), la disponibilité des interfaces de réseau (30/31) du premier et/ou du second noeud de réseau mobile (10/11) est vérifiée périodiquement et la table Lookup respective (401/411) est actualisable.

21. Système selon l'une des revendications 16 à 20, **caractérisé en ce qu'**au moins un canal de signalisation (Sc) peut être adapté ou changé de manière dynamique au moyen du module de routeur de signalisation (50/51) en se basant sur la première et/ou la seconde table Lookup (401/411) et/ou sur les paramètres de communication.

22. Système selon l'une des revendications 16 à 21, **caractérisé en ce qu'**en se basant sur la première ou la seconde table Lookup (401/411) et/ou sur les données de configuration, plusieurs canaux de signalisation (SC) sont réalisables, des paramètres de communication et/ou des paramètres de sécurité étant associés à chacun des canaux de signalisation (SC).
